# EUROPEAN PATENT APPLICATION

(11) **EP 1 250 853 A1**
(43) Date of publication of application: **23.10.2002**
(21) Application number: 02252560.4
(22) Date of filing: 10.04.2002
(51) Int. Cl.: A23L 1/275, A22C 13/00, A22C 13/02

(54) **A red colorant composition for food casings**

(30) Priority: 10.04.2001 US 282753
(71) Applicant: Viskase Corporation, Willowbrook, Illinois 60527 (US)
(72) Inventor: DuCharme, Paul E. Jr., IL 60477 (US); Nicholson, Myron Donald, Lemont, IL 60439 (US)
(74) Representative: W.P. THOMPSON & CO.

(57) **Abstract**

Colorant compositions for use on the food-contacting surface of a food casing comprise natural red colorants, antioxidants and, optionally, neutralized liquid smoke and a peeling aid. Use of the composition results in foodstuffs having a smoky color usually seen when encased food is cooked and treated with acidic liquid smoke.

## Description

The present invention relates to the production of foodstuffs having the smoky color usually seen by treatment of encased food during cooking by acidic liquid smoke, with the use of compositions of natural red colorants and/or neutralized liquid smoke. These compositions are used to coat the interior of casings that are then stuffed and cooked to produce foods such as sausages and cheeses.

Historically, different colorants have been applied to various foodstuff, such as sausage and cheese surfaces by various means. For example, sausages have been colored by smoking with gaseous or liquid wood smoke, by dipping peeled sausages into a vat containing a colorant, by spraying or dipping encased sausages with a casing permeable liquid dye, and also by stuffing sausage meat into casings having their interior surfaces coated with a transferable colorant. Use of self-coloring cellulosic casings made with synthetic colorants was approved by the United States Department of Agriculture in 1947 and such casings have been commercially available since 1948. In different regions of the world and for various products, different colors range in popularity and some colorants may impart flavor as well as color. In Brazil, a very popular sausage with a smooth surface is made by dipping cooked and peeled sausages in a vessel containing heated, water-soluble annatto colorant (norbixin in water).

This water-soluble annatto colorant is fixed to the surface of the sausage by contact with an acid, typically phosphoric acid. A complete description of this method of coloring sausages is found in US patent 5,955,126, which is herein incorporated by reference in its entirety.

Frankfurters span a range of colors, from a very light red to a much darker one, depending on which part of the world they are sold in. Sausages made of coarsely ground meat, such as polish sausages, tend to have a more intense reddish color than does the average frankfurter, but they also come in a range of colors.

Various patents disclose coloring or flavor compositions including compositions that contain annatto, norbixin or bixin.

US patent 5,955,126 discloses the use of a bixin colorant composition wherein the bixin is contained in a water-soluble film-forming agent, and is applied as an internal colorant on shirred casings, providing a red color to sausages processed inside these casings.

US Patent 4,285,981 (Todd, Jr. et al.) issued in 1981, discloses liquid seasoning compositions useful for flavoring or coloring foods and beverages. The disclosed compositions are purportedly dispersible in both oil and water, and consist essentially of lecithin, tartaric acid esters of mono- and di-glycerides, and one or more edible flavorants or colorants such as annatto extract, bixin or norbixin. The colorants may be used in an amount between 1-20% by weight of the composition.

US Patent 4,699,664 (Hettiarachchy et al.) issued in 1987, discloses a process for preparation of natural pigment complexes having improved stability against oxygen, heat, light and moisture, and which are water soluble under acidic conditions. In the disclosed process, a pigment such as bixin, norbixin or betanin is combined with at least one inorganic polyvalent cation source and with at least one hydrocolloid having at least one carboxyl group in an aqueous alkaline medium. The hydrocolloid may be modified cellulose, or derivatives or salts thereof. Compositions are also claimed in which a polyvalent cation is associated with both the pigment and the hydrocolloid through their respective carboxyl groups.

US Patent 4,877,626 (Ande et al.), which issued in 1989, discloses that a mixture of liquid smoke, caramel and optionally bixin (or annatto) may be used to directly color raw meat prior to processing.

US Patent 4,759,936 (Best et al.), which issued in 1988, discloses a food coloring composition that may comprise annatto, an oil (preferably of triglycerides), an emulsifier (preferably of monoglycerides, diglycerides or mixtures thereof), and a gelling agent of carrageen and water.

US Patent 5,079,016 (Todd, Jr.), which issued on January 7, 1992, discloses color stabilized carotenoid pigment compositions that consist essentially of an annatto, tomato, carrot, marigold, or synthetic carotenoid in combination with a nonionic surfactant.

US Patent 5,139,800 (Anderson et al.), which issued August 18, 1992, discloses a composition comprising a dispersed phase consisting essentially of a colorant (or a colorant dissolved or dispersed in an oil-immiscible medium) and a continuous phase consisting essentially of an oil or edible fat, wherein the composition is colorless when applied to food, but causes browning upon cooking. The colorant may comprise water-soluble annatto, beet powder, carmine or caramel among others. The oil may be a vegetable oil or partially hydrogenated vegetable oil among others. The composition may further comprise an emulsifier such as mono-and diglycerides and may also include a viscosifying agent in an amount of from about 0.01 to about 1 percent by weight. This viscosifying agent may be hydroxypropylcellulose, carboxymethylcellulose, methylcellulose, agar, pectin, starch, gelatin, xanthin gum, or guar gum among other agents. The composition may also include a film forming agent, preferably hydroxypropylcellulose or methylcellulose. Other suitable film forming agents are said to include zein, arabinogalactan, and carboxymethylcellulose among others. Also, the composition may further comprise an oil soluble colorant such as oil soluble annatto in a concentration of from about 0.01 to about 2 percent of the composition. The composition is disclosed as being suitable for application to foodstuffs including poultry, beef, fish, cheese, pork, fruits and vegetables.

Self-coloring food casings used in the processed food industry are generally thin-walled tubing of various diameters, typically prepared from cellulose. In general, these food casings are stuffed with sausage meats, which are then processed. During the processing, color is transferred to the encased foodstuff, thereby coloring the surface of the finished product. Typically the encased foodstuff is sausage made from beef, pork, chicken, turkey or other meats. In the sausage meat industry, the casing from around the processed meat is removed prior to final packaging. These skinless sausages are generally processed in nonfiber-reinforced (nonfibrous) cellulose casing. The term "nonfibrous" is used here to mean without use of fiber reinforcement (e.g., a paper tube) in the casing and nonfibrous is most commonly understood in the art to refer to casings without paper or a previously bonded fiber reinforcement. Nonfibrous casings are typically used to process small diameter sausages including polish sausages, wieners, or frankfurters. However, larger diameter sausages such as salami are frequently sold with the casing left on. These sausages are usually packaged in fiber-reinforced (fibrous) cellulosic or nylon casing. Self-coloring casing transfers colorant to the sausage surface during processing so that the sausage surface remains colored after removal of the casing.

In one method of manufacturing of nonfibrous, self-coloring, cellulose sausage casings, viscose is typically extruded through an annular die into a coagulating and regenerating bath to produce a tube of regenerated cellulose, as is well-know in the art. In another method, cellulose is dissolved by a tertiary amine oxide and later, the cellulose is precipitated to form a film or filament, as described in US patent 2,179,181. This tube is subsequently washed, plasticized, e.g., with glycerine, impregnated with a water-soluble, casing-permeable colorant, and dried by inflation under substantial air pressure. After drying, the self-coloring casing is wound on reels and subsequently shirred on high-speed shirring machines, such as those described in US Patents 2,984,574; 3,451,827; 3,454,981; 3,454,982; 3,461,484; 3,988,804 and 4,818,551. In the shirring process, typically lengths of from about 40 to about 200 or more feet (from about 12 m to about 70 m or more) of casing are compacted (shirred) into tubular sticks of between about 4 and about 30 inches (about 10 and about 76 cm). These shirred casing sticks are packaged and provided to the meat processor who typically causes the casing sticks to be deshirred at extremely high speeds while stuffing the deshirred casing with a meat emulsion. The meat can be subsequently cooked or pasteurized and the casing removed from the meat processed therein with high-speed peeling machines. The resulting peeled sausage is colored by the colorant that has transferred from the casing to the surface of the sausage during cooking or pasteurization. Colorless nonfibrous casings are made in a similar fashion, but without the color additive steps.

For fibrous casing, a process of manufacture similar to that for nonfibrous casing is employed. The viscose is extruded onto one or both sides of a tube formed by folding a web of paper so that the opposing side edges overlap. In production of fibrous casing, the viscose impregnates the paper tube where the viscose coagulates and regenerates to produce a fiber-reinforced tube of regenerated cellulose. The fibrous or paper reinforcement is generally used in tubular casing having diameters of about 40 mm or more in order to provide dimensional stability, particularly during stuffing with meat emulsion.

Production of both nonfibrous and fibrous casing is well-known in the art and the present invention may utilize such well known processes and casings.

Cellulosic casings are typically humidified to a level sufficient to allow the casing to be shirred without undue breakage from brittleness, yet humidification must be at a level low enough to prevent undue sticking of the casing to the shirring equipment, e.g., the mandrel, during the shirring operation. Often a humectant is employed to moderate the rate of moisture take-up and casing swelling, to produce a casing that during the shirring operation has sufficient flexibility without undue swelling or stickiness. Typically, a lubricant such as an oil will also be used to facilitate passage of the casing through the shirring equipment, e.g. over a shirring mandrel.

It has been useful to lubricate and internally humidify cellulose casings during the shirring process by spraying a mist of water and a stream of lubricant through the shirring mandrel. This is an economical, fast and convenient way to lubricate and/or humidify the casing to increase the flexibility of the casing and facilitate high speed shirring without undue detrimental sticking, tearing or breakage of the casing. Additional components, such as coloring agents, may be added to the shirring solution, and thereby introduced into the interior of the casing.

Cellulosic food casings suitable for use in the present invention will preferably have a moisture content of less than about 100 wt. % based upon the weight of bone dry cellulose ("BDC"). The term "bone dry cellulose" as used herein refers to cellulose such as regenerated, derivatized or nonderivatized cellulose and/or paper which has been dried by heating the cellulose in a convection oven at 160°C for one hour to remove water moisture. In the formation of cellulosic casing an extruded cellulosic film forms what is known as gel stock casing having a high moisture content in excess of 100 wt. % BDC. This gel stock casing is unsuitable for stuffing with food such as meat emulsion, e.g. to form sausages, because it has insufficient strength to maintain control of stuffing diameter and prevent casing failure due to bursting while under normal stuffing pressure. Gel stock casing is typically dried to a moisture level well below 100 wt. % (BDC) which causes the cellulose to become more dense with increased intermolecular bonding (increased hydrogen bonding). The moisture level of this dried casing may be adjusted, e.g., by remoisturization, to facilitate stuffing. Such remoisturization or moisture adjustment, e.g., by drying to a specific level, for nonfibrous casing is typically to a level with a range of from about 5 to about 40 wt. % BDC. Small diameter nonfibrous casing, prior to shirring, will have a typical moisture content of about 10-20 wt. % BDC, and such small diameter nonfibrous casing when shirred will have a moisture content that has been adjusted to between about 20 to 40 wt. % BDC.

For fibrous casing, casing is commercially produced having a moisture content ranging from about 4 wt. % BDC to about 70 wt. % BDC. Typically, premoisturized, ready-to-stuff, fibrous casing which does not require additional soaking or moisturization will have a moisture content of from about 26 to about 70 wt. % BDC. Also commercialized is fiber-reinforced casing having a moisture level between about 4 to about 25 wt. % BDC. Such low moisture casing will be soaked prior to stuffing by a food processor.

Also, thermoplastic casings such as polyamide casings made from monolayer or multilayer structures containing a nylon layer are known. Nylon casings comprising a blend of nylon with polyester are known, as are multilayer casings of nylon with ethylene polymers or copolymers. These also have a moisture content ranging from about 1-3 weight %. Multilayer casings, such as those having an outer layer being the nylon layer and the inner, or food contact layer, being made of an absorbent material such as a cellulosic film made from viscose, are also known.

In the formation of skinless frankfurters, where the casing is removed after processing, sausage proteins coagulate, particularly at the sausage surface, to produce a skin and allow formation of a liquid layer between this formed skin and the casing as described in US Patent 1,631,723 (Freund). In the art, the term "skinless frankfurter" is understood to mean that the casing is or is intended to be removed and that such casing may be removed because of formation of a secondary "skin" of coagulated proteins on the surface of the frankfurter. This secondary skin forms the outer surface of the so called "skinless frankfurters". Skin formation is known to be produced by various means including the traditional smoke curing with gaseous smoke, low temperature drying, application of acids such as citric acid, acetic acid or acidic liquid smoke or combinations thereof. Desirably, this secondary skin will be smooth and cover the surface of the frankfurter. Formation of a liquid layer between the casing and the frankfurter skin facilitates peeling and relates to the meat emulsion formulation, percent relative humidity during the cooking environment, subsequent showering, and steam application to the chilled frankfurter.

Also, application of certain types of coatings to the inside wall of food casings may improve the release characteristics of the casing from the encased sausage product. Use of peeling aids or release coatings has helped to overcome peelability problems associated with process variables. Following cooking, cooling and hydrating, peeling aids such as water-soluble cellulose ethers help release the casing from the frankfurter skin by formation of a peeling enhancing layer between the casing and the frankfurter skin.

In US Patent 3,898,348, the coating of internal surfaces of cellulose sausage casings with a homogeneous mixture of a water-soluble cellulose ether peeling aid and a pleat release agent selected from animal, vegetable, mineral and silicon oils and alkylene oxide adducts of partial fatty acid esters was taught. Such mixtures have excellent meat release characteristics and can also effectively protect the casing from "pinholing" failures occasioned by pleat locking. Easy peeling casings utilizing the release coating have found broad commercial acceptance and are presently in use in casings throughout the world.

US Patent 4,137,947 to Bridgeford discloses a method of improving the meat release (peelability) of cellulose sausage casings by the application of a meat release coating to the internal surface thereof prior to shirring. The aqueous coating is an admixture of a water-soluble cellulose ether, the partial fatty acid ester of sorbitan or mannitan and a water-soluble polyalkylene ether

These peeling aid coatings have been used with varying degrees of success to provide cellulosic casings capable of being peeled on high speed machine peelers. Generally such cellulosic casings either with or without peeling aid coatings have an approximately neutral pH with pH values typically falling within a range of about 5.9 to 8.6.

Use of various transferable colorants on food packaging, including cellulosic casing, has been known for some time.

Self-coloring casings are disclosed in US Patents 2,477,767; 2,477,768 and 2,521,101. These casings are designed to transfer color to the sausage surface. Such casings are generally either coated or impregnated with food grade water-soluble dyes and have also been made commercially available with nontransferable black or white or colored opaque stripes. Also, liquid smoke impregnated casings are known to transfer liquid smoke to the surface of sausages encased therein, transferring a flavorant or colorant and also causing a browning reaction on the sausage surface.

Liquid smoke solutions are available in a number of formulations. Previously, standard liquid smoke solutions were known as "as-is" solutions, where the liquid smokes were generally highly acidic within a pH range of about 2.0 to about 2.5 and a titratable acidity of at least 3 wt. %, and also contained tar-like components. When used to treat casings, particularly the external surface of a casing, the tar content caused sticky deposits to accumulate on equipment used to treat the casing. The acidity of the liquid smoke also interfered with the peelability of the casing by interfering with the action of the peeling aid used, such as carboxymethyl cellulose. The low pH liquid smoke also caused the cellulose to degrade, resulting in pinholes and such in the casing itself. In addition, iron contamination caused dark spots on the processed sausages, which were then unacceptable to the consumer.

It was found that tar could be removed from the liquid smoke by neutralizing the "as is" smoke to precipitate the tar, filtering resulting solids, and by adding polysorbate, which solubilized all remaining tars, thereby eliminating the tarry deposit accumulation problem. Further treatment of the casings containing liquid smoke with sodium biphosphate is often used to prevent black spotting on the enclosed foodstuffs caused by the iron contamination. Neutralization of the liquid smoke, even partially, reduces the cellulose degradation problem, and allows the peeling agents to perform as intended, as described in US Patent 4,540,613, which is incorporated herein by reference.

Unfortunately, one problem seen when using neutralized liquid smoke to color and flavor sausages (or any foodstuffs), is that the resulting reddish smoky color is lighter and "muddier" than that preferred by the customer and as seen when treatment is done with acidic liquid smoke. Greater amounts of neutralized liquid smoke, at a higher cost, as compared with acidic liquid smoke, must be used to produce an acceptable reddish-smoky color. Additionally, a longer contact time during processing of the neutralized liquid smoke with the foodstuff produces an acceptable color, but also at a higher cost. The longer contact time is not acceptable to high speed manufacturers, who are looking for shorter processing times, and therefore lower costs, to produce product.

US Patents 2,477,767 and 2,477,768 disclose regenerated cellulose sausage casings uniformly treated with a transferable, edible natural coloring matter. Included in a list of such materials is annatto. The colorant may be applied with glycerine and/or other polyhydric alcohols or vegetable oil.

French Patent Publication No. 2,258,798 discloses use of cellophane coated with an annatto derived dye such as sodium or potassium norbixin in combination with a xanthene-type food dye to color a meat surface.

PCT Publication No. WO 91/03917 published in 1991, discloses a microwavable container having a coating of a transferable browning agent such as annatto. This disclosure states that the browning agent may be applied in microwave transparent material in an aqueous binder. The microwave transparent material purportedly may be any food grade plastic or cardboard material known for use in microwave containers. Suitable aqueous binders are said to include gelatin, starch, starch derivatives, gums and fat based binders such as palm kernel oil. Typical amounts of browning agent are disclosed as being applied suspended in a binder at a concentration of 0.1 to 2% by weight with drying for 6 to 10 minutes at 60°C to achieve physical stability so that the coating does not flake or rub off. It is further suggested that other additives may be present in the coating including flavorings, such as sweeteners, and emulsifiers, such as lecithin, to facilitate dispersion.

Also, shirred cellulosic casings have been obtained from the marketplace which are believed to have had a nonuniform coating of bixin, phosphate and vegetable oil on the inner surface of the casing. Such casings transfer color to sausages, but an undesirably large amount of the color may be wiped off the sausages unless they are treated with a separate phosphoric acid solution. Also, the color transferred from these casings to sausages made both with highly emulsified or coarsely ground ingredients tends to be nonuniform varying from light to dark orange with distinct lines of color associated with shirring folds and edges of flattened and reeled casing. These pleat lines are very undesirable to the final customer. Peeled sausages made in such casing continue to require contact with colorant in a dip tank and a subsequent acid dip to provide a product having commercially acceptable color uniformity and intensity. The vacuum packaged frankfurters made with this casing exhibit an undesirable colored purge. These casings in the shirred stick form also have poor coherency.

Orange to orange-red sausages are made using self-coloring casings dyed with synthetic colorants such as coal tar dyes that have been approved by government regulation for use on food. These dyes, which are typically known as FD & C dyes, are typically applied to cellulosic casings by dipping gel stock casing into a tank containing an aqueous mixture of glycerine and the FD & C dyes. A combination of water-soluble red and yellow FD & C colorants produce an orange color and these colorants permeate and migrate through the wall of cellulose casing dipped therein so that colorants applied to the exterior of gel stock casing migrate through the casing to the interior surface. The gel stock casing is then dried, forming semifinished casing. Semifinished casing may be shirred directly in a continuous operation from the gel stock casing or it may be wound on reels and subsequently formed into shirred sticks and used conventionally.

In addition, upon transfer to the surface of a sausage, FD&C dyes have a tendency to penetrate into the sausage and migrate away from the surface towards the center of the sausage. However, the customer prefers that only the coagulated proteinaceous surface skin be colored, and not the interior of the sausage. Also, where blends of these colorants are used such migration may occur at different rates and to different extents thereby producing a chromatographic effect where the sausage in cross-section may have different colors, e.g., red, orange, and yellow as well as the natural meat color, because of separation of constituent dyes of a blended colorant as the individual dyes migrate away from the sausage surface at different rates of speed.

In some markets only natural red colorants (derived from biological organisms), such as cochineal, turmeric, annatto and caramel are authorized by law and the use of synthetic (fossil-fuel derived or nonbiologically derived) colorants such as coal tar dyes is not allowed. This is especially true for many South American and Asian markets where use of natural red colorants derived from plants or animals are preferred by custom or law.

In addition, in the United States, from time to time, certain FD & C colorants have been removed from the list of governmentally approved colorants, thereby creating customer apprehension regarding use of all such coal tar-derived colorants. There also exists a preference among many consumers for food colorants that are naturally derived from renewable plants or animals over synthetically derived colorants.

Natural red colorants, such as annatto, both in the oil-soluble form of bixin or the water-soluble form of norbixin, are less stable than synthetic dyes and tend to oxidize in the presence of air or under light, thereby causing fading and loss of color intensity. Also, natural red colorants will vary in shading and color may change during processing. The color appearance of a natural red colorant such as bixin or norbixin may vary from one sausage product to another depending upon such factors as sausage formulation and processing conditions including, e.g., relative humidity and acid showering. Changes in pH of the colorant coating caused by process variations may produce pH based color changes.

Bixin is not soluble in water and also is not easily dispersed in water by itself. Attempts to disperse bixin (or bixin with oil) in water generally yield poor dispersions, which have little or no affinity for cellulose films. Dispersions consisting of bixin in water, or bixin and oil in water, have produced nonuniform, undesirably uneven coatings on cellulose casing, which are commercially unacceptable.

The present invention seeks to overcome the above deficiencies including those deficiencies found in prior art liquid smoke compositions, annatto compositions, and self-coloring casings by providing a transferable, uniformly coloring colorant composition used to coat a peelable casing, thereby producing reddish-smoked colored foodstuffs using current high-speed manufacturing practices. The inventive casing has a food contact internal colorant coating that has preferential substantivity to a protein and fat containing foodstuff such as meat, cheese or processed beans, but in particular to coarsely ground meat, and to meat emulsions that when processed become smooth-skinned sausages. In one preferred embodiment, the coloring transferred to encased polish sausage, a coarsely ground meat product, by the shirred casing of the present invention appears uniform over the outside layer of the sausage, without leaving any pleat markings on it. Another embodiment of the invention provides casings in the form of bags or pouches that have an internal coating of the inventive colorant composition, and that are used to encase whole muscle meats, such as hams, beef, chickens, chicken parts, veal and pork. Such encased meats are then cooked and have a reddish-smoky color when the casing is removed.

A preferred embodiment of the colorant composition according to the present invention comprises a composition of at least one natural red colorant, such as bixin suspended or dissolved in oil ("bixin in oil"), aqueous neutralized liquid smoke having a pH in the range of from about 4.0 to about 9.0, with a lower titratable acidity of less than about 6%, and an antioxidant. The antioxidant may include tocopherol, ascorbate, erythorbic acid, BHT or BHA, to stabilize the colorant composition and prolong shelf life and maintain colorant intensity. In addition, peeling aids such as cellulose ether may be added to the composition. Preferred peeling aids are water-soluble, especially the water-soluble cellulose ethers, and particularly carboxymethyl cellulose, along with food grade waxes such as carnauba wax.

The liquid smoke/natural red colorant coloring composition may also include other components. A polyphosphate such as sodium tripolyphosphate may similarly stabilize color and may also promote color transfer from casing to foodstuff. Generally, water is used as a carrier for the colorant components and to facilitate coating of the colorant composition on the casing surface. Some surfactants may be added in small amounts (less than 10% of the coating weight) to assist flow of the liquid smoke/natural red colorant composition across the casing surface to promote uniformity of the coating both on the casing and ultimately, when transferred, on the foodstuff surface. Also, glycerine may be added to the composition as a humectant, as is well known in the casing arts. Compositions of the invention may also include emulsifiers such as lecithin. In order to promote fixation of transferred natural red colorant, such as bixin, on a foodstuff, the colorant composition may include shellac or an edible wax such as beeswax, carnauba wax or candelilla wax.

Also, in order to facilitate formation of self-sustaining, deshirrable, shirred sticks of casing having easy peeling properties, the inventive compositions may also preferably contain an anti-pleat lock agent, such as an oil, and a surfactant. Other ingredients may also be utilized in a coating composition. Typically employed casing additives are known to the art and may include, for example, humectants, antimycotics, lubricants and antiblock agents.

The food casing according to the present invention has an inner surface coating, which comprises a transferable colorant coating composition of at least one natural red colorant, such as bixin in oil, aqueous neutralized liquid smoke having a pH in the range of from about 4.0 to about 9.0, with a lower titratable acidity of less than about 6%, and an antioxidant, preferably vitamin E. A preferable composition also includes a cellulose ether derivative, in an amount effective to aid release of encased foodstuff. This composition is coated on the inner surface of the casing using conventional means, in an amount sufficient to provide a self-coloring casing having a reddish-smoky color. This color is transferable to a foodstuff surface by contact with the foodstuff during heat, water, and thermal processing to provide a noticeably reddish-smoky colored foodstuff surface. Such transfer is advantageously uniform and in particular, lacks any pleat markings as known in the prior art, especially if the encased foodstuff is a coarsely ground meat or a meat emulsion, cooked or pasteurized prior to removal of the casing. The mixture may include colorant coating stabilizers and other components as described above. Both the inventive colorant composition and the inventive coated casing containing the colorant composition utilize neutralized liquid smoke and a natural red colorant, such as bixin, as the colorants. The natural red colorant augments the loss of color seen in the use of less acidic, or "neutralized" liquid smoke solutions. Bixin is a preferred natural red colorant. Bixin is oil soluble and not soluble in water. The term "bixin" as it is used herein does not include norbixin.

A process for producing a uniformly colored foodstuff is disclosed whereby a suitable inventive casing is provided, and is either stuffed with the foodstuff or is used to surround or encase the foodstuff, which is then thermally processed. Then, the casing is removed, leaving a reddish-smoky colored foodstuff.

Another preferred embodiment of the invention is a colorant composition as described above, but without a neutralized liquid smoke component. In this embodiment, the colorant composition is used to coat the inner surface of the food casing of the present invention in an amount sufficient to transfer the color to the encased foodstuff during the cooking process of the foodstuff, where the encased foodstuff is also treated by being sprayed, drenched, or atomized with a neutralized liquid smoke. After the completion of the treatment, the casing is removed and the foodstuff is left with a reddish, smoky coloring that is very similar to the foodstuffs produced with acidic liquid smokes.

The invention is a novel composition of a neutralized liquid smoke, a natural red colorant, and an antioxidant, and optionally a peeling aid such as a cellulose ether derivative; a self-coloring, peelable food casing having a food contact surface internal coating of the above described composition of liquid smoke and natural red colorant; and a process for producing a uniformly colored foodstuff that is thermally processed in the inventive casing.

The invention also includes a composition of a natural red colorant and an antioxidant, and optionally a peeling aid such as a cellulose ether derivative; and a self-coloring, peelable food casing having a food contact surface internal coating of a composition of a natural red colorant and an antioxidant, and optionally a cellulose ether derivative; and a process for producing a uniformly colored foodstuff that is thermally processed in the inventive casing, where the processing includes contacting the outer surface of the casing with neutralized liquid smoke.

The inventive casing is particularly useful with small diameter casings, and even more particularly as tubular nonfibrous casings that are used for processing foodstuffs, such as sausages made of emulsified meat, and sausages made of coarsely ground meat, such as polish sausage, cotto salami, kielbasa, and bierwurst. It is also useful in casings, such as larger bags or pouches used to surround whole muscle meat products, such as hams, beef, chickens or chicken parts, veal, and pork, which are then processed in the casings. The novel colorant composition acts as a transferable colorant with preferential substantivity to the foodstuff surface and not the casing. After cooking in these casings that may be small diameter casings, encased links may be mechanically peeled off and the surface of the link is uniformly colored with a reddish-smoky color that does not wash or rub off and that closely approximates the color transferred to the links when acidic, "as is" liquid smoke is used to color and flavor sausages. In addition, the reddish coloring derived from the natural red colorant with or without the neutralized liquid smoke is imparted from the casing to the enclosed foodstuff in approximately the same amount of processing time needed to process links (with high speed machinery) using "as is" acidic liquid smoke.

Casings may be made of any suitable material including monolayer or multilayer, large or small diameter, seamless or seamed tubular films of cellulose, collagen or thermoplastics such as nylon, polyethylene, polypropylene, ethylene vinyl alcohol copolymer, polyvinylidene chloride copolymer ("PVDC") or polyvinyl alcohol, but preferably comprises cellulosic casings. Barrier casings, such as nylon or plastic coated cellulose casings may also be employed, such as PVDC coated fiber-reinforced cellulose or nonreinforced cellulosic casing. The barrier coating is only found on the non-food contact layer of the casing. The food contact surface must always be an absorbent layer, such as cellulosic casing. In one embodiment of the invention, the inventive colorant composition is coated on the food contact surface of a fiber-reinforced cellulose casing which has an oxygen and moisture barrier coating on the opposite surface. This barrier coating is preferably a polyvinylidene chloride copolymer such as saran.

As the term is used herein, "casings" may be planar or tubular films, or may be in the form of pouches or bags. The casings may be wrapped around a foodstuff by any of the well known means in the art, which, depending on the casing material used and package type, may include, e.g., twisting the casing, heat sealing to produce a fusion bond, pressure sealing (with or without heat) to produce a peelable seal, clipping, and sealing with an adhesive or wax.

Although casings are used to produce many types of sausages, and in particular those made with smooth emulsions of various meats and fillers, the preferred product produced with the inventive self-coloring casings are sausages of the polish sausage type, i.e., those that are made from coarsely ground meats. It has been found that the combination of neutralized liquid smoke and at least one natural red colorant such as bixin or paprika, provides a preferred reddish-smoky colored sausage, similar to that seen when acidic liquid smoke is used under low humidity conditions, with acceptable, uniform color transfer from the shirred casing.

The manufacture of such casings is well known in the art and one of ordinary skill is aware of the common variations in such parameters as moisture content, type and amounts of such additives as plasticizers, antimycotics, etc. Tubular casings are typically gathered into shirred sticks using well known processes and equipment. During the shirring operation it is common to coat the casing, particularly the inner surface of a tubular casing by spraying, with a composition termed a shirr solution that may contain such ingredients as an anti-pleat lock agent, a lubricant, a surfactant, water and/or a humectant. Some components may serve multiple functions, for example, when lecithin or mineral oil is used, these materials may act as anti-pleat lock agents and as lubricants to facilitate travel of the casing over a shirring mandrel or stuffing horn. Coating with a shirr solution is done to facilitate shirring of the casing and form easily deshirrable, self-sustaining sticks of shirred casing that are adapted for stuffing with products, particularly emulsions that form sausages.

The inventive coloring composition is sprayed on the inner surface of the casing, preferably with a shirring spray solution. Casings also may be coated by other well-known means such as slugging. Some natural red colorant molecules, and in particular the bixin molecule, do not pass through the casing wall and therefore it is preferable to slug the liquid smoke/bixin colorant composition inside the casing and/or apply it to the casing inner surface via the shirr spray. Application of other additives and coating compositions via solution spraying is convenient, economical and facilitates placement of a regular measured distribution of a coating on the casing surface. For example, peeling aids such as carboxymethyl cellulose ("CMC") may be added in the shirr spray as is taught in the art. Casings made according to the present invention are preferably coated with the inventive liquid smoke/natural red colorant coating composition containing a peeling aid, or the coating composition lacking the natural liquid smoke, by spraying, to provide a uniform coating.

In one embodiment of the invention, casings are internally coated with a colorant composition containing as essential components neutralized liquid smoke having a pH from about 4.0 to about 9.0; natural red colorant, such as bixin in oil; an antioxidant, preferably Vitamin E; and water-soluble peeling aid such as a cellulose ether derivative, i.e., CMC. Preferably, the inventive composition will also contain an alcohol and/or trisodium polyphosphate. In a most preferred embodiment, such colorant compositions will contain the neutralized liquid smoke, bixin in oil, an antioxidant, and a water-soluble cellulose ether. Additional components of the composition include a surfactant (preferably a mixture of ethoxylated monodiglycerides) and glycerine for equilibrium with glycerine contained in the casing. Glycerine helps to hold moisture in the casing. Lecithin may also be utilized as an emulsifier or surfactant.

In another embodiment of the invention, casing are internally coated with a colorant composition essentially as that described immediately above, with the absence of neutralized liquid smoke. The natural red colorant imparts color to the foodstuff encased within during processing, and the neutralized liquid smoke is introduced to the foodstuff through the outside of the exterior wall of the casing, when during processing the encased foodstuff is contacted with the neutralized liquid smoke in traditional ways.

The food casings of the present invention may be prepared from tubular casings, particularly non-fibrous casings of cellulose, e.g., regenerated or dissolved cellulose. These coated casings are fabricated in accordance with any of the known commercial methods of applying a coating composition to the internal surface thereof. The coating composition components are more fully described below.

The primary component of a preferred mode of the inventive composition and the inventive casing is a neutralized, concentrated, tar-depleted liquid smoke (see US patents 4,356,218, 4,511,613, 4,540613 and 4,818,551, which are hereby incorporated by reference in their entirety) to provide the basic smoke color. The casings may be treated with phosphates to inhibit discoloration and black spot formation on the casing, as disclosed in the above patents. Neutralized liquid smoke was developed to avoid certain problems inherent in the use of acidic compounds, plus the problem seen with acidic liquid smokes having to do with the tar components. It is well known that an acidic liquid smoke delivers, after cooking under low humidity conditions, a deep reddish-smoky color to the surface of sausages treated with it. It is also well-known in the art that acidic liquid smoke interferes with the water soluble cellulose ethers, such as CMC, that are used as peeling aids, making it very difficult, if not impossible, to mechanically remove the spent casing cleanly, without damaging the sausages encased within, with a high speed peeler. Acidic liquid smoke also causes, in time, cellulose degradation in the casing, thereby weakening it for the sausage manufacturer. For the customer, acidic smokes are hard on equipment and pose environmental pollution issues in some geographical areas. In contrast, neutralized, concentrated, tar-depleted liquid smoke, under more productive higher humidity conditions, delivers less of the desired reddish-smoky color to the encased sausages. However, as the pH of the liquid smoke reaches a pH from about 4.0 to about 9.0 and has a titratable acidity of less than about 6%, the peeling action of the cellulose ether remains almost unaffected by the neutralized liquid smoke, and a reduction of cellulose degradation is seen, thereby making the casing acceptable from a mechanical handling viewpoint.

The second essential component of the coating for casings according to the present invention is at least one natural red colorant in the colorant formulation. Certain natural red colorants that may be useful in the colorant composition that is used to produce the inventive casing include bixin, carmine, cochineal, paprika, annatto, elderberry, grape, cabbage, beet, and logwood. Although bixin is the preferred colorant, other natural red colorants may be used to either replace bixin, or a number may be combined to produce an acceptable color on the finished product. Combinations of the red colorants with natural colorants of different shades, yellow colorants such as saffron and turmeric, for example, can also be used to adjust the desired final color. Although it is preferable from an economic viewpoint to introduce the inventive colorant composition onto the interior of the casing via a shirring solution, it is envisioned that, depending on the solubility characteristics, molecular weight and size of the natural red colorants, and their affinity to the casing itself, a formulation of the neutralized liquid smoke and the natural red colorants, along with any other additional components that may be necessary, could be applied on the outer surface of the casing, by spraying or drenching, for example. The benefit of not having to deal with an acidic composition would still be seen as an advantage to the manufacturer of smoked products.

The preferred natural red colorant is bixin, also called cis-bixin. Bixin is a natural carotenoid colorant extracted from the pulpy seeds of the annatto tree (Bixa Orellana). Bixin (C₂₅H₃₀O₄) has a molecular weight of 394.5 and the following formula:

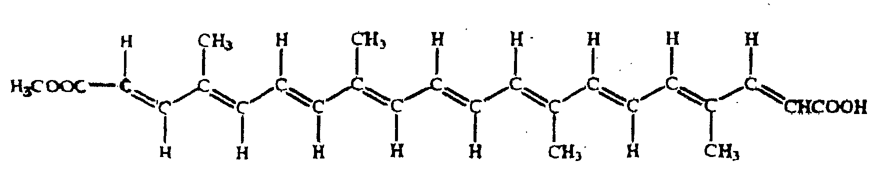

Bixin has a carboxyl end group and an esterified carboxyl end group. Upon saponification, the methyl ester end group is changed to another carboxyl group thereby forming norbixin. Bixin is oil-soluble whereas norbixin is water-soluble. It has been found that over a time of about two weeks or more cellulose casing coated with norbixin becomes much less color transferable than bixin-coated cellulose casing. In contrast, oil-soluble bixin solubilized in oil, such as soybean oil and mono- and diglycerides, does not bind to cellulose to the same extent, but instead has a greater affinity for protein and fat containing foodstuffs such as sausage coarsely ground meat, cheese, tofu or textured vegetable protein. A particularly preferred bixin composition is known as A-400-S, sold by CHR Hanson, Inc. of Milwaukee, Wisconsin, USA. It is an oil soluble suspension of annatto color, containing soybean oil, mono- and di-glycerides, and annatto extract.

The addition of the bixin colorant to the neutralized, concentrated, tar-depleted liquid smoke appears to replace the coloring lost by neutralizing the acidic liquid smoke, and the combination produces the preferred reddish-smoky color on processed foodstuffs, and in particular on sausages made of coarsely ground meat. The color produced is equivalent to the red color seen on similar sausages when an acidic liquid smoke treatment is used.

During processing of the foodstuffs, high cooking temperatures and the presence of moisture both help to release the inventive colorant pigment from the casing wall so that the colorants contact the sausage surface, thereby coloring it.

Preferred peeling aids are edible water-soluble cellulose ethers. Suitable cellulose ethers that may be employed are the non-ionic, water-soluble, alkyl and hydroxyalkyl cellulose ethers such as, for example, methylcellulose, hydroxypropyl methylcellulose, hydroxypropylcellulose, ethyl methylcellulose, hydroxyethylcellulose and ethyl hydroxyethylcellulose and the anionic water-soluble cellulose ethers such as, for example, CMC and carboxymethyl hydroxyethylcellulose. Commercially, CMC and carboxymethylhydroxyethyl-cellulose are almost always sold as the sodium salt, and it is well-established trade practice not to refer to the commercial product as the sodium salt. For the purpose of this application, reference to these anionic materials shall include salts thereof. Other peeling aids that may be needed to allow other types of casings, such as those containing a polymer or nylon layer, may also be used.

An optional additional component of the coating composition is a polyphosphate, such as an alkali metal polyphosphate, preferably tri- and longer chain polyphosphates such as potassium or sodium tripolyphosphate. An especially preferred polyphosphate is available from BK Ladenburg Corp. of Cresskill, New Jersey, USA under the trademark BRIFISOL7 512, as a food grade blend of polyphosphates that is believed to contain sodium tripolyphosphate. The polyphosphate may promote color transfer from the casing to the sausage surface and binding on the sausage surface by causing expansion of protein chains on the sausage surface thereby allowing pigment to be carried into the expanded structure. The polyphosphate may be multifunctional and act as a color enhancer, buffer, stabilizer, binding agent and transfer agent.

Beneficially, an additional component to the composition and the inventive casing will be an antioxidant color stabilizer such as a tocopherol, ascorbate, sodium erythorbate (sodium isoascobate), tea extract or other extracts of Labiatae plants such as rosemary, sage or thyme extracts. Vitamin E (tocopherol) is a preferred antioxidant, which acts to stabilize color intensity. Such stabilization may be more noticeable upon aging of the colorant or colorant coated casing particularly for 4-6 weeks or longer at room temperature (~25°C).

The preferred bixin composition has glycerine, propylene glycol, or oils, such as vegetable oil, added to promote spreading of the colorant composition on the casing surface and enhance uniformity of color transfer to the sausage surface.

Excessive oil (about 10% or more of the coating composition) may have a deleterious effect on shirred casing stick coherency. Preferably oil or fat is present in the colorant composition in an amount less than 10% by weight, and more preferably in an amount less than 8%, and most preferably in an amount of at least 1% to about 5%.

The preferred colorant coating composition of this invention is a combination of coloring agents, shirring solution, and optionally peeling aids, and is applied in one step, instead of in multiple steps or layers. However, typical commercially used shirring solution and peeling aid compositions may be applied as a first coating layer, with the coloring agent layer being a composition of neutralized liquid smoke and bixin in oil being applied as a second layer.

Also, surfactants such as lecithin, polysorbates including polyoxyethylene (20) sorbitan monolaurate (sold under the trademark Tween 20 from ICI Americas Inc. of Wilmington, Delaware, USA) or ethoxylated monodiglycerides (sold under the trademark Mazol 80 MG K by Mazer Chemicals, Inc. of Gurnee, Illinois, USA) may be employed to facilitate uniformity, spreadability, and/or transferability of the liquid smoke/natural red colorant composition, or the coloring composition containing no liquid smoke, from the casing to the encased foodstuff.

The amount of coating composition applied to the casing will typically be from 600-1200 mg. coating/100 in² (0.93-1.86 mg/100 cm²⁾ of coated casing surface. The coating may be applied during shirring as a spray. Alternatively, the inventive colorant containing coatings may be applied to gel stock casing by slugging prior to drying, or by slugging semi-finished casing after drying and prior to shirring. Slugging or a combination of slugging and addition may enhance uniformity of the coating on the casing during shirring by spray.

Also, the inventive colorant containing coatings may be applied to dissolved cellulose or a cellulose derivative prior to tube formation, e.g., in viscose, in order to produce colored casing. Although it is expected that some colorant would be entrapped within the casing and not transfer, it is also believed that the liquid smoke and the proper natural red colorant(s) located on the surface of the casing would transfer during processing to a protein and fat containing foodstuff surface held in contact with the casing surface under elevated temperature.

In general, tubular casings of the present invention will contain sufficient natural red colorant and liquid smoke to color the sausage surface uniformly and to visually perceptible color intensity, and in addition, shirred casings color without leaving any pleat marks on the processed sausages made of coarsely ground meat. Such intensity will vary according to customer tastes in the marketplace. Suitable amounts of one colorant, bixin, range from 0.10 to about 0.5 mg/in² (0.016-0.078 mg/cm²) of casing (food contact surface), while amounts of neutralized liquid smoke range from about 6 to about 11 mg/in² (about 0.93 to about 1.71 mg/cm²). Lesser amounts of bixin and/or neutralized liquid smoke will produce decreased color intensity, while greater amounts of these colorants will produce a more intense color. Use of amounts greater than 0.5 mg/in² (0.078 mg/cm²), while believed to be workable, may be uneconomical due to the expense of the bixin, a natural dye pigment colorant. Generally, colorant compositions made according to the present invention will have typical amounts of bixin in the range of about 1-8 wt. % with a preferred composition of the invention having at least 2.5 wt. % bixin and less than about 8 wt.% and liquid smoke in the range of about 75 wt.%, with a preferred composition of the invention having at least 50 wt.% and less than about 90 wt.%. Other natural red colorants used in the colorant compositions made either with or without liquid smoke will be present in amounts effective to color the surface of the foodstuff processed in the casing. As exact coloration of the finished foodstuff is a choice made by the ultimate manufacturer, each amount of natural red colorant needed will be determined by the subjective needs of each manufacturer.

In some embodiments of the invention, the treated casing will be coated with the inventive colorant composition in an amount sufficient to produce casing having L,a,b colorimetry values of an L-value of at least 10.0 points less than clear, nontreated viscose casing, such as that sold under the tradename, NOJAX®, by Viskase Corporation of Chicago, Illinois, USA, and preferably about 12 to about 20 points less than such casing, and an a-value that is at least 6 points greater than the clear casing, and preferably from about 8 to about 12 points greater than the clear control casing.

The amount of the polyphosphate included may also vary widely. Typical amounts of polyphosphates or blends thereof may range from 0.01 to 0.10 mg/in² (0.002 to 0.016 mg/cm²) of casing surface (i.e., the casing surface intended for food contact).

The antioxidant/color stabilizer may be used in an amount effective to promote layer color transfer and/or prevent or lessen any decrease in color intensity over time. Amounts from less than about 0.01 to more than 0.1 mg/in² (about 0.002 to more than 0.016 mg/cm²) of casing surface (food contact surface) are believed to be suitable.

Drying agents such as alcohols may be present in widely varying amounts, e.g. up to 60% by weight of the colorant coating composition. These agents generally assist evaporation of water from the casing during drying and prior to shirring. Glycerine may also be present in widely varying amounts. Glycerine may be provided in the coloring composition in an amount from 0 to 5% or more based upon the weight of the colorant coating composition.

Peeling agents may also be added to the internal coating of the casing. The amount of water-soluble cellulose ether present on the internal surface of the food casing can vary over a wide range, although very small quantities are actually required. In general, cellulosic casings of the present invention will contain from about 2 to about 10 mg. of cellulose ether derivative/100 in² (645 cm²) of casing surface, and preferably between from about 2.5 to about 7.5 mg./100 in² (645 cm²) of said cellulose ether derivative. Greater amounts of the cellulose ether component may be used, if desired, although generally it will not materially improve the release characteristics of the casing.

Another component of the peeling aid composition may be a food grade wax. Examples of food grade waxes include water-soluble, physiologically harmless, high molecular aliphatic hydrocarbons, such as paraffin wax, as described in British Patent 723,323, or oxazoline wax as described in US Patent 4,163,463, both of which are incorporated by reference herein. The preferred embodiment of the present invention uses a carnauba wax dispersion, a wax well known in the art, in concentrations of from about 5 mg./100 in² (0.008 mg/100 cm²) to about 30 mg./100 in² (0.047 mg/100 cm²) of coated casing surface. A particularly preferred concentration of carnauba wax dispersion is from 8 mg./100 in² (0.012 mg/100 cm²) to about 19 mg./100 in² (0.030 mg/cm²) of coating casing surface.

Surfactants, such as a phospholipid in the form of lecithin, may also act as color stabilizers and promote uniformity of the color transfer. Such surfactants may be present in the bixin color coating composition in amounts from 0 to 1% by weight or more based upon the weight of the colorant coating composition.

Beneficially, a surfactant/emulsifier component of the inventive coating composition according to present invention may be lecithin. Lecithin is also an anti-pleat lock agent, that may also act as a surfactant with both wetting and emulsifying properties. It may also promote peelability of the casing. Lecithin is known to function as a release aid, dispersant, lubricant, softener and to control viscosity in various food industry applications. As used herein, the term "lecithin" includes both unsubstituted lecithin and substituted lecithin, that has been modified by chemical means.

Since lecithin may be utilized in the present invention as an antipleat lock agent or possibly to enhance or potentiate a peeling aid as well as an emulsifier, the amount of lecithin present on the internal surface of the casing may vary over a wide range.

Other surfactants suitable for use in the coating compositions of the present invention include those surfactants which act as wetting agents for the cellulosic casing surface and/or as emulsifying agents for the coating composition. This may also include peeling aids, or shirring lubricants. Nonlimiting examples of suitable surfactants include water dispersible or at least partially water-soluble surfactants such as alkylene oxide adducts of either fatty acids or partial fatty acid esters, for example, ethoxylated fatty acid partial esters of such polyols as anhydrosorbitols, glycerol, polyglycerol, pentaerythritol, and glucosides, as well as ethoxylated monodiglycerides, sorbitan trioleate, lecithin, and aliphatic polyoxyethylene ethers such as polyoxyethylene (23) lauryl ether.

Preferred surfactants include polyoxyethylene sorbitan fatty acid esters or mixtures thereof such as those sold under the trademark Tween™ such as Tween™ 20 (polyoxyethylene (20) sorbitan monolaurate) or Tween™ 80 (polyoxyethylene 20 sorbitan monooleate) (both commercially available from ICI Americas Inc. of Wilmington, Delaware, USA), ethoxylated monodiglycerides or mixtures thereof such as those sold under the trademark Mazol 80 MG K (commercially available from Mazer Chemical, Inc. of Gurnee, Illinois, USA), sorbitan trioleate (commercially available from ICI Americas Inc. under the trademark Span 85), and phosphalipids including lecithin. An especially preferred surfactant is a mixture of ethoxylated monodiglycerides such as Mazol 80 MG K. Some surfactants are also known to act as anti-pleat lock. Suitable amounts of a surfactant, such as a mixture of ethoxylated monodiglycerides (Mazol 80), may be present on the inner surface of the casing in order to wet the casing surface and assist in dispersing the antipleat lock agent, especially oils, and to emulsify and/or stabilize peeling aid compositions which contain components of varying solubilities. Desirably, amounts of a surfactant may range from about 0.005 to about 0.06 mg/in² (0.0008-0.0009 mg/cm²) and preferably for a surfactant of ethoxylated monodiglycerides such as Mazol 80 from about 0.01 to 0.02 mg/in² (0.002-0.003 mg/cm²). Too little surfactant may lead to an uneven distribution of the coating composition on the casing surface and with increased surfactant any additional benefits are believed to be reduced in significance relative to the added cost or possible deleterious effect on shirred stick properties such as coherency, deshirring forces and straightness of the shirred stick.

Addition of water to casing acts as a plasticizer that may facilitate the shirring operation. Accordingly, when it is desired to apply the liquid smoke/natural red colorant or simply the natural red colorant containing coating compositions described herein, for example, while the tubular casing is passing over a shirring mandrel just prior to or during the shirring operation, the amount of total coating compositions (including any peeling aid composition, or components added to assist in shirring or for other reasons) applied while treating the internal surface of the casing with the inventive colorant composition is controlled to limit the amount of water added to the casing. Likewise addition of other chemical components may so be controlled.

It is advantageous to avoid application of more coating composition than can be imbibed by the casing in order to prevent excess coating composition from being lost and wasted or from accumulating in localized areas of the shirred sticks with resulting detrimental effects thereto. Generally, not more than about 1.1 mg/in² (0.93 mg/cm²) and preferably not more than about 8 mg/in² (0.78 mg/cm²) of total aqueous based coatings should be applied to the internal surface of the tubular casing. The application of the total coating compositions should be further controlled so that less than about 5 mg/in² (0.78 mg/cm²) of water is applied to the surface of the casing. Cellulose casing after shirring should have a suitable moisture content of about 25 to 50 wt % based upon bone dry cellulose and preferably about 30 to 40% for small diameter cellulosic casing. Casing brittleness increases with decreasing moisture content and the tendency to produce curved, nonuniform and/or swollen shirred sticks subject to post-shirring elongation increases with higher moisture levels.

A natural red colorant composition for use on the food-contacting surface of a food casing comprises:
a) a natural red colorant in an amount effective to color a foodstuff that is encased in the coated casing;
b) from about 50 wt.% to about 90 wt.% aqueous neutralized liquid smoke having a pH in the range of about 4.0 to about 9.0, with a lower titratable acidity of less than about 6%;
c) from about 0.05 wt.% to about 0.20 wt.% sodium erythorbate;
d) from about 0.4 wt.% to about 0.8 wt.% carboxy methylcellulose;
e) from about 0.15 wt.% to about 0.50 wt.% sodium biphosphate;
f) from about 0.5 wt.% to about 2.0 wt.% carnauba wax emulsion; and
g) from about 0.1 wt.% to about 1.5 wt.% of Tween™ 80.

The natural red colorant may be any one of, or a combination of, bixin, annatto, carmine, cochineal, paprika, elderberry, grape, cabbage, beet, and logwood. It has been found that if the colorant is bixin, the above composition may contain from about 0.3 wt.% to about 3.0 wt.% of bixin in food grade oil. The same composition, without the liquid smoke, may also be used to coat the interior of casing. When this formulation is used, however, in order to match the reddish, smoky coloring seen when "as is" acidic liquid smoke is used during thermal processing of encased foodstuffs, the processing step must include contacting (or oversmoking) of the coated inventive casing with a neutralized liquid smoke. A combination of the natural red colorant composition on the interior wall of the casing with the oversmoking of the encased foodstuffs with the neutralized liquid smoke will produce a smoky colored foodstuff similar in color to the foodstuff colored only with acidic liquid smoke.

Preferably multilayer thermoplastic casing or casing in which the colorant composition (containing liquid smoke at greater than 80% by weight) is coated on an absorbent, food-contact layer will have less than 6 mg/in² (0.93 mg/cm²) of colorant coating on the food contact surface of the casing (or from about 600 to about 1200 mg/100 in² (645 cm²)).

Another factor known to be especially important in affecting the suitability of shirred casing sticks for use with automatic food stuffing equipment is the durability or coherency of the shirred stick as a self-sustaining article. A disjunction or break in the shirred stick prior to mounting on the stuffing apparatus may make the stick unsuitable for use. Accordingly, any treatment such as the application of a coating to a tubular food casing that is to be formed into shirred casing sticks must be considered in light of its effect on coherency. Advantageously, such coatings will assist in formation of shirred sticks of casing which have sufficient coherency to hold together from immediately after shirring through shipping and ultimate use, while allowing the shirred casing to be easily deshirred during stuffing operations without production of casing defects such as holes or tearing and without requiring undue force thereby minimizing such defects.

The following test methods are referred to in this application and examples.

### L,a,b Test

Hunter L,a,b values are standard color scale values which indicate differences in brightness, hue and saturation using a standard color system which relates lightness as L values, and hue and croma as a combination of a and b values on a coordinate scale where a represents redness-greenness and b represents yellowness-blueness. L values describe the degree of darkness, where a value of 100 equals white and that of 0 equals black. a-values describe the degree of redness, which increases with an increasing a-value. b-values describe the degree of yellowness, which increases with increasing b-value. L,a,b and opacity theory and measurement are further described in the Instruction Manual Hunter Lab 45°/0° D25-PC2ΔColorimeter, pp. 1-1 through index-5. (Hunter Associates Laboratory, Inc., April, 1988). Hunter L,a,b and color scale values and opacity may be measured by the following tests.

Encased or peeled frankfurters may be tested as is. Casing samples to be tested as in the Examples below are shirred casings that are deshirred and folded over twice to give 8 layes of film to make uniform the coloring disparities in each individual section of film. These coloring disparities are due to shirring pleats, drier folds, and other issues due to the handling of casing once it has been treated with coloring agents.L,a,b values and opacity are measured using a colorimeter such as a Hunter D25-PC2Δ colorimeter available from Hunter Associate Laboratory, Inc. of Reston, Virginia, USA or the Color Machine Model 8900 available from Pacific Scientific.

Samples are placed on the sample plane of the colorimeter (which is calibrated using standard tiles according to the manufacturer's instructions) where a 45° incident light from a quartz-halogen lamp (clear bulb) illuminates the sample. An optical sensor placed at 0° (perpendicular to the sample plane) measures the reflected light which is filtered to closely approximate CIE 2° Standard Observer for Illuminant C. Values are reported using a standard Hunter L,a,b color scale.

Casing sample placement is accomplished as follows. A shirred tubular casing sample containing the desired smoke and or colorants is deshirred and folded over twice in the longitudinal direction to form a test sample having eight thicknesses of film. The casing sample is placed on the white tile provided for measuring samples. The casing and tile are then held in close contact against the sample port, that is equipped with a sample port insert having an appropriately sized aperture. The aperture should be no larger than the area to be sampled. The casing is placed with the axis of the longitudinal direction (machine direction) perpendicular to the path of the incident light travelling to the sample from the quartz-halogen lamp light source. The deshirred and folded casing is generally positioned so that the former exterior surface of the tube is adjacent to the sample port. Alignment of the casing sample is checked to avoid obvious defects and L,a,b values are measured. The casing sample is then repositioned to a different area of the casing sample and L,a,b values are measured again. The repositioning and remeasuring is repeated to obtain a set of values, which are then averaged.

Measurements of L,a,b colorimetry values for frankfurters are similarly performed except the frankfurter, either encased or peeled, is held directly against the port opening, typically a circular opening about 0.5 inches (1.27 cm) in diameter, and it is not necessary to use a tile background during measurement. Three measurements per frankfurter are made and five frankfurters are tested.

The invention will become clearer when considered together with the following examples which are set forth as being merely illustrative of the invention and which are not intended, in any manner, to be limitative thereof. Unless otherwise indicated, all parts and percentages are by weight.

### Peeling Test

Various self-coloring coated sausage casings were made using the compositions described in the examples below. The clear positive control casing was a small diameter cellulose casing having a peeling aid which is marketed under the trademark E-Z PEEL NOJAX® Casing by Viskase Corporation.

Commercially produced, nonfibrous, small diameter casings of regenerated cellulose made from viscose were used to prepare all of the coated casings of these examples, known as NOJAX® casing, made by Viskase Corporation. The casings were coated by spraying the internal surface of the casing with the formulations from the examples below while shirring of the casing was taking place. The finished casings were used as shirred sticks of casing.

These test shirred sticks of casing were stuffed with meat emulsions on a high speed FAM mechanical stuffer, which formed individual links as the casings were stuffed. The links of sausages were processed as they would be in a commercial manufacturer's factory, using heat, humidity, and cook cycle times consistent with processing a meat emulsion product. Once the links were finished cooking, the casing was then mechanically slit and the released links were examined for defects due to the inability of the casing to be removed from the finished links. Marring of the surface of the links or chunks of meat torn from them are some of the defects that are possible when peeling is poor. Commercially acceptable casing must release the sausages without damage at greater than 99% of the time. The links were also test for L,a,b values, and in one experiment, the links were tested for L,a,b values after processing but prior to the removal of the casing from the links.

### Example 1. Formulations

The basic formulation of the inventive composition used in Examples 2-4 was prepared as follows.

The components of the formulation were distilled water (DI water); CMC, from Hercules, Inc., known as 7LF; neutralized, buffered liquid smoke from Hickory Specialties, Inc. of Brentwood Tennessee, USA, with a pH of 5.62, a % acidity of 4.8%, a staining index of 140.5, containing 26.6 mg/ml of phenol, and with a specific gravity of 1.267; sodium biphosphate; carnauba wax emulsion Slyp Ayd 535 EK, manufactured by Elementis Corporation ("SL 535E"); Tween® 80; sodium erythorbate monohydrate; and Annatto A-400-S.

0.55 wt % (66 grams) of CMC 7LF and 13.55 wt % (1626 grams) DI water were blended at high speed for about four (4) minutes. 82 wt % (9840 grams) of neutralized liquid smoke, 0.3 wt % (36 grams) of sodium biphosphate, 1.9 wt % (228 grams) of Carnauba Wax SL 535E, 0.1 wt % (12 grams) of Tween 80, 0.1 wt % (12 grams) of sodium erythorbate, and 1.5 wt % (18 grams) of Annatto A-400-S were added to the blended CMC and DI water, and mixed for about thirty (30) minutes.

This formulation was used to coat the test casing in the following Examples 2-4.

Additional compositions were made for comparative purposes where the pH of the liquid smoke formulation was changed by the addition of malic acid and sodium citrate, use of an "as is" acidic liquid smoke replaced the neutralized liquid smoke, or the Annatto component was removed. These comparative compositions were also used to coat test casing.

### Example 2

These experiments were performed to compare the peelability of casing from processed sausages where the casing is coated with either the inventive composition or with more acidic comparative compositions. The neutralized liquid smoke/bixin formulation of Example 1 was used to coat small diameter, nonfibrous cellulose casing. To compare the inventive casing with acidic liquid smoke coated casings, another coating formulation was used to coat the same type of casing, while lowering the pH of the coating on the casing. The acid comparative coating was prepared similarly to the inventive formula, but the Annatto component was left out, and malic acid and sodium citrate was added, which made the internal coating more acidic. The casings were loaded with about 950 mg/100 in² (1.47 mg/100 cm²) of the respective formulations by application as a shirring solution.

A positive control of E-Z PEEL NOJAX® casing, from Viskase Corporation of Chicago, Illinois, was used. This casing contained no coloring component, but did have an internal coating of a peeling aid, which promotes peeling of the links by high speed mechanical peelers. A negative control of NOJAX® was also used. This is a small diameter, nonfibrous cellulose casing that is not colored and does not have any internal peeling aids coated on its internal surface.

**TABLE 1 -**

| PEELABILITY | | | | |
|---|---|---|---|---|
| **No.** | **Sample** | **pH of liq. smoke** | **No. of links** | **Average % Peeled** |
| 1 | E-Z PEEL Control | - | 387 | 97.2 |
| 2 | NOJAX Control | - | 377 | 19.4 |
| 3* | Inventive formulation | 5.5 | 379 | 97.9 |
| 4** | No Annatto, acidic liquid smoke comparison | 5.5 | 377 | 69.2 |
| 5^ | No Annatto, acidic liquid smoke comparison | 2.0 | 378 | 35.2 |

| | | | | |
|---|---|---|---|---|
| * Formula of Ex. 1. | | | | |
| ** Formula of Ex. 1, without Annatto, with malic acid and sodium citrate. | | | | |
| ^ Formula **, and an acidic liquid smoke substituted for the liq. smoke of Ex. 1. | | | | |

As can be seen from Table 1, the negative control, Sample #2, exhibited an unacceptable level of peeling of about 19%, leaving 81% of the links damaged and unusable, while the positive control, Sample #1, exhibited 97% peelability, leaving only about 3% of the links damaged and unusable. The inventive casing of Sample #3 peeled from the links in about the same percentage as the positive control, while the acidic liquid smoke system of Sample #4 and the formulation with an even more acidic pH, Sample #5, both showed poor peeling, at about 69% and 35%.

This Example 2 shows how acidic liquid smoke formulation-coated casing delivers poor peelability of the links processed within such casing, whereas a casing having a more neutral liquid smoke formulation performed at commercially acceptable levels.

### Example 3

The Samples of Example 2 were further tested for color transfer. It is well-known that acidic conditions during processing of encased links produces a desirable reddish-smoky color on the surface of the links. This Example shows how even at a pH outside of the usual acidic pH of "as-is" liquid smoke, pH 2.0-2.5, or at a pH higher than that expected with a acidic shower, the inventive casing transfers color in a desirable range, and in particular, the reddish component of color, to the processed links.

L,a,b readings were performed on links with and without casing. Test measurements of links still in the casing are important as sausage manufacturers adjust their manufacturing processes based on visual inspection of the links, while measurement of the casing-free links illustrates the transfer of color from the casing to the links.

**TABLE 2 -**

| **COLOR TRANSFER** | | | | | | | |
|---|---|---|---|---|---|---|---|
| **No.** | **Sample** | **Casing** | **pH of Liq. Smoke** | **# of Links** | **L - Value** | **a - Value** | **b - Value** |
| | | | | | Avg. (S.D.) | Avg. (S.D.) | Avg. (S.D.) |
| 1 | E-Z PEEL Control | On | - | 387 | 38.78 (1.21) | 15.24 (0.89) | 11.70 (0.49) |
| 2 | NOJAX Control | On | - | 377 | 38.82 (1.37) | 15.52 (0.54) | 11.89 (0.65) |
| 3* | Inventive Formula | On | 5.5 | 379 | 35.96 (0.87) | 18.44 (0.67) | 14.70 (0.56) |
| 4** | No Annatto, acidic Liquid Smoke | On | 5.5 | 377 | 36.75 (0.88) | 17.56 (0.62) | 13.58 (0.55) |
| 5^ | No Annatto, acidic Liquid Smoke | On | 2.0 | 378 | 36.10(1.02) | 17.80 (0.62) | 13.58 (0.40) |
| 6 | E-Z PEEL Control | Off | - | 387 | 38.79 (1.08) | 14.86 (0.63) | 12.07 (0.53) |
| 7 | NOJAX Control | Off | - | 377 | 38.35 (1.21) | 15.52 (0.68) | 11.73 (0.57) |
| 8* | Inventive Formula | Off | 5.5 | 379 | 37.04 (1.12) | 18.07 (0.70) | 14.71 (0.66) |
| 9** | No Annatto, acidic Liquid Smoke | Off | 5.5 | 377 | 38.85 (0.97) | 16.94 (0.80) | 13.82 (0.46) |
| 10^ | No Annatto, acidic Liquid Smoke | Off | 2.0 | 378 | 36.54 (1.17) | 17.76 (0.87) | 13.31 (0.62) |

| | | | | | | | |
|---|---|---|---|---|---|---|---|
| * Formula of Ex. 1. | | | | | | | |
| ** Formula of Ex. 1, without Annatto, with malic acid and sodium citrate. | | | | | | | |
| ^ Formula **, and an acidic liquid smoke substituted for liq. smoke of Ex. 1. | | | | | | | |

As seen in Table 2, the control Samples 1, 2, 6, and 7 had high "L" values, denoting lighter links, but the lowest (less red and less yellow) "a" and "b" scores, as neither control had a color component on its inner coating that could be transferred to the test links.

The casing Samples coated with the most acidic liquid smoke, plus the addition of malic acid and sodium citrate (#5, 10) produced test links with L values lower than the controls and therefore were darker than the controls, but had higher a and b values than the controls. As the pH of the casings was acidic when compared to the control samples, and the casings also contained liquid smoke, this effect was expected, in particular making the acidic links redder than the control links. Similar results were seen with the other acidic samples, # 4 and 9. However, when considering the results of Table 1, the peelability of the acidic samples was extremely poor when compared to the positive control - again, an expected result due to the interference of the acidity with the CMC peeling agent.

The inventive casings of Samples # 3 and 8 produced test links with slightly lower L values than the peeled links, as compared to the controls and the liquid smoke-malic acid formulations of #4, 5, 9, and 10, but showed the highest a-values (more red) and b-values (more yellow) in links with and without the casing. It is believed that although less of the red and yellow coloring results from neutralized, buffered liquid smoke than does from acidic liquid smoke, the addition of the natural red colorant, in these cases bixin, makes up for the lost reddish-smoky coloring, and in these samples, even exceeds what is seen in the acidic systems. The peelability of this inventive casing, as shown in Table 1, was also as good as the positive control, and much better than either of the more acidic casings.

### Example 4

The experiments of this Example 4 were done to compare the differences in L,a,b-values, and peelability, in links make with the inventive casing, having a variety of loadings of the inventive formulation coated onto the casings. In addition, the effect of pH on the peelability of the links was also tested, as approximately one-half of the links were acid showered during the processing cycle. The links were processed at 25% relative humidity.

Sample 11 is the positive control, NOJAX®, as above.

Sample 12 is a casing coated with the inventive composition of Example 1, at a concentration of 1000 mg/100 in² (1.55 mg/100 cm²).

Sample 13 is the same as #12, but with a loading of 800 mg/100 in² (1.24 mg/100 cm²).

Sample 14 is the same as #12, but with a loading of 600 mg/100 in² (0.93 mg/100 cm²).

Sample 15 is a casing coated with the inventive formulation of Example 1, but lecithin is substituted for the carnauba wax, and the total formulation is loaded onto the interior of the test casing at a concentration of 1000 mg/100 in² (1.55 mg/100 cm²).

Sample 16 is the same as #15, but with no lecithin or carnauba.

Sample 17 is the same as Sample 16, but with a loading of 836 mg/100 in² (1.30 mg/100 cm²).

**TABLE 4 -**

| PEELABILITY AND COLOR | | | | | | | |
|---|---|---|---|---|---|---|---|
| **No.** | **Sample** | **Acid Shower** | **# Links** | **Avg. % peeled** | **L-value** | **a-Value** | **b-Value** |
| 11. | E-Z PEEL Control | Yes | 92 | 100 | 43.75 | 15.09 | 13.22 |
| | | No | 93 | 100 | 44.72 | 12.34 | 12.76 |
| 12. | 1000 mg load | Yes | 95 | 45.3 | 40.87 | 16.37 | 15.35 |
| | | No | 83 | 98.8 | 39.32 | 16.06 | 15.25 |
| 13. | 800 mg. load | Yes | 93 | 38.7 | 41.00 | 16.24 | 15.12 |
| | | No | 91 | 82.4 | 40.71 | 14.75 | 15.03 |
| 14. | 600 mg. load | Yes | 92 | 51.1 | 42.23 | 15.63 | 15.16 |
| | | No | 91 | 78.0 | 41.92 | 14.35 | 14.86 |
| 15. | 1000 mg. | Yes | 92 | 72.8 | 39.98 | 16.39 | 14.87 |
| | | No | 95 | 90.5 | 40.24 | 14.76 | 14.73 |
| 16. | load 1000 mg. | Yes | 92 | 77.2 | 39.36 | 16.78 | 14.95 |
| | | No | 94 | 88.3 | 39.47 | 14.70 | 14.57 |
| 17. | load 836 mg. load | Yes | 55 | 78.2 | 39.50 | 16.66 | 15.85 |
| | | No | 89 | 69.7 | 39.83 | 15.40 | 15.57 |

As can be seen in Table 4 above, peelability is generally much better when the links were not acid-showered, except for the positive controls. In the L,a,b-value system, an approximately 2 to 3 point difference in any of these values is visible to the naked eye. In the Table above, the test links produced with the positive control Sample had a lighter color (L-value), both with and without acid shower, than did the test Samples. The a- and b-values of the links produced with the test samples were higher than those seen in the positive controls, therefore denoting links that were more red or more yellow than the positive control Sample.

Therefore, this Example demonstrates that peelability is affected by an exterior acid wash, that color is still transferred to the encased foodstuff under neutralized conditions, and that the colored sausage is redder, or at least no less red than the red obtained with an acid shower. This color is transferred from the inventive casing without the use of highly acidic conditions, eliminating all problems that are seen in manufacturing situations with the use of acid liquid smokes.

### Example 5

The formulations of the inventive composition used in Example 6 were prepared as follows.

The components of the formulations were the same as given in Example 1 with the addition of the following natural colorants: Aquaresin® Paprika (02-040-19) and Aquaresin® Turmeric (12-050-19) from Kalsec, and CC-OSS-102 oil soluble carmine (GIN#218331) and Cochineal Red Liquid (GIN# 601855) from Chr. Hansen.

For the liquid smoke containing shirred casings, the smoke and colorant were premixed at the weight % colorants given in Table 5. CMC at 0.56 wt % (11.2 grams) of CMC 7LF and 13.75 wt % (275 grams) deionized ("DI") water were blended at high speed for about 4 minutes, and 83.25 wt % (1665 grams) of the premixed colorant and neutralized liquid smoke, 0.3 wt % (6 grams) of sodium biphosphate, 1.93 wt % (38.6 grams) of Carnauba Wax SL 535E, 0.1 wt % (2 grams) of Tween® 80, and 0.1 wt % (2 grams) of sodium erythorbate were added to the blended CMC and DI water, and mixed for about thirty (30) minutes. These natural colorant/smoke mixtures were applied as shirring solutions to the casing at a loading of 950mg/100in² (1.47 mg/100 cm²).

For the colorant-only shirred casings, the same procedure was used to make simpler shirring solutions with different amounts of colorant added for equivalence to the casing using the mixed smoke/colorant. For example, with the annatto control, 1.42 wt.% (28.4 grams) of CMC 7LF and 84.33 wt.% (1686.6 grams) of DI water were blended at high speed for about 4 minutes, and 5.70 wt.% (114 grams) propylene glycol, 4.38 wt.% (87.6 grams) of Carnauba Wax SL 535E, 0.27 wt.% (5.4 grams) Mazu DF210S, and 3.9 wt.% (78 grams) Annatto A-400-S were added to the blended CMC and DI water, and mixed for about 30 minutes. This colorant solution was applied to the casing as a shirring solution, at a loading of 365 mg/100 in² (0.566 mg/100 cm²). The corresponding colorant-only solutions for the other colorants and casing loadings were as follows: paprika at 2.11 wt.% at 359 mg/100 in² (0.557 mg/100 cm²); Cochineal RL at 3.05 wt.% at 362 mg/100 in² (0.561 mg/100 cm²); CC-OSS-102 at 1.06 wt.% at 355 mg/100 in² (0.550 mg/100 cm²); Cochineal RL at 3.45 wt.% plus Aquaresin® Turmeric at 3.20 wt.% at 376 mg/100 in² (0.583 mg/100 cm²); and CC-OSS-102 at 1.49 wt.% plus Aquaresin® Turmeric at 2.92 wt.% at 367 mg/100 in² (0.569 mg/100 cm²).

These formulations were used to coat the test casing in the following Example 6.

### Example 6 - Natural Red Colorants With and Without Liquid Smoke

These experiments were performed to compare the color transfer from casing coated with the formulations of Example 5 to the sausages processed within this casing. Each sample casing was prepared with one natural red colorant composition of Example 5 containing the neutralized liquid smoke, and the same colorant composition without the neutralized liquid smoke. One peelable, shirred stick of treated casing was prepared for each formulation at a loading of 950 mg/100 in² (1.47 mg/100 cm²) for the smoke/colorant containing casings and at 355-376 mg/100 in² (0.550-0.583 mg/100 cm²) for the colorant-only containing casings, depending on colorant used. The casings were stuffed with a commercially manufactured Polish Sausage emulsion. The stuffed casings having no liquid smoke component on the interior wall were drenched with a neutralized liquid smoke having a pH of approximately 4.8 for 45 seconds. The stuffed casings were thermally treated according to a standardized cooking schedule. After the cooking process was completed, the stuffed casings were tap water showered and chilled overnight in the dark at 37°F (2.8°C). The sausages were peeled by hand prior to being evaluated for color using the L,a,b method described above. The sausages were uniformly colored and no color was lost due to rub off.

**Table 5**

| **Sample** | **Colorant** | | **Smoke/Color - No Oversmoke** | **Color Only - Oversmoke** | **Color Values** | | |
|---|---|---|---|---|---|---|---|
| | **Type** | **wt%*** | | | **L** | **a** | **b** |
| Clear | None | None | X | | 47.9 | 12.5 | 15.1 |
| Control | | | | | | | |
| Annatto Control | annatto | 1.8 | X | | 45.0 | 14.6 | 18 |
| A | paprika | 0.96 | X | | 45.1 | 14.3 | 17.9 |
| B | Cochineal | 1.4 | X | | 45.0 | 13.9 | 16.5 |
| C | Carmine | 0.48 | X | | 45.6 | 14.0 | 16.7 |
| D | Cochineal/Turmeric | 1.64/1.52 | X | | 46.0 | 13.5 | 17.5 |
| E | Cochineal/Turmeric | 1.4/1.0 | X | | 46.3 | 13.2 | 17.5 |
| F | Carmine/Turmeric | 0.7/1.36 | X | | 45.6 | 14.6 | 17 |
| G | Carmine/Turmeric | 0.55/1.0 | X | | 46.3 | 14.3 | 17.1 |
| H | None | See Clear Control | | X | 43.9 | 14.1 | 16.8 |
| I | Annatto | See Annatto Control** | | X | 43.9 | 15.2 | 18.1 |
| J | See A | See A** | | X | 44.0 | 14.9 | 18.6 |
| K | See B | See B** | | X | 44.9 | 13.8 | 16.7 |
| L | See C | See C** | | X | 45.6 | 14.2 | 16.8 |
| M | See D | See D** | | X | 45.5 | 13.2 | 17.8 |
| N | See F | See F** | | X | 45.1 | 14.4 | 17.7 |

| | | | | | | | |
|---|---|---|---|---|---|---|---|
| * for smoke/colorant mixes, colorant is given as the weight % of smoke in the shirring solution | | | | | | | |
| ** casing colorant loading is equivalent to the indicated smoke/colorant shirred casings | | | | | | | |

The results shown in Table 5 indicate that both the clear control and the control sample using annatto were well matched in smoke color with the samples containing paprika, and very nearly matched by the carmine and turmeric blend of natural red colorants, in the sausages produced by the casings containing neutralized liquid smoke in the coating formulation, and when the liquid smoke was oversmoked during processing of the sausages. The remaining sausages were all found to be within 3 points of each of the L, a, and b values of the controls, thereby visible to the naked eye. Depending on the needs of a particular manufacturer, it is believed that all of the above combinations could be acceptable to a sausage manufacturer.

The L,a,b-values of the test casings as described in Table 5, were taken with casing sticks that were deshirred. The test casing sticks were deshirred and folded twice, giving 8 layers of single film, against a white background with an average of 5 readings. The results are shown in Table 6 below.

**TABLE 6 -**

| CASING L,a,b-VALUES | | | | | |
|---|---|---|---|---|---|
| | **Colorant System** | | | | |
| **Sample** | **Liq. Smoke** | **Colorant** | **L-value** | **a-value** | **b-value** |
| Clean Control | None | None | 63.07 | -0.81 | 8.84 |
| Annatto Control | Yes | annatto | 46.96 | 10.48 | 20.64 |
| A | Yes | paprika | 47.88 | 8.13 | 21.2 |
| B | Yes | cochineal RL | 49.99 | 5.19 | 20.64 |
| C | Yes | carmine OS | 50.46 | 6.88 | 18.35 |
| D | Yes | cochineal RL/turmeric | 48.33 | 6.67 | 24.18 |
| F | Yes | carmine OS/turmeric | 48.53 | 7.77 | 22 |
| I | None | annatto | 51.36 | 11.83 | 19.48 |
| J | None | paprika | 54.11 | 6.83 | 23.42 |
| K | None | cochineal RL | 54.91 | 10.28 | 3.5 |
| L | None | carmine OS | 53.6 | 9.27 | 5.64 |
| M | None | cochineal RL/turmeric | 48.24 | 8.35 | 20.65 |
| N | None | carmine OS/turmeric | 46.01 | 13.46 | 20.37 |

As can be seen by the data in Table 6 above, the tested inventive casings show an L-value of at least 10.0 points less than the clear control casing, and preferably about 12 to about 20 points less than the control casing, and the a-value is at least 7 points less than the clear control casing, and preferably from about 8 to about 12 points less than the clear control casing.

## Claims

1. A colorant composition for use on the food-contacting surface of a food casing comprising:
a) at least one natural red colorant;
b) aqueous neutralized liquid smoke having a pH in the range of about 4.0 to about 9.0, with a lower titratable acidity of less than about 6%;
c) an antioxidant; and
d) optionally, a peeling aid.

2. A colorant composition according to claim 1, wherein said natural red colorant is selected from the group consisting of bixin, annatto, carmine, cochineal, paprika, elderberry, grape, cabbage, beet, and logwood.

3. A colorant composition according to claim 1 or claim 2, wherein said antioxidant is selected from the group consisting of tocopherol, ascorbate, sodium erythorbate, tea extract, rosemary extract, sage extract, and thyme extract.

4. A colorant composition according to any preceding claim, wherein said peeling aid is a cellulose ether derivative selected from the group consisting of methylcellulose, hydroxypropyl methylcellulose, hydroxypropylcellulose, ethyl methylcellulose, hydroxyethylcellulose, ethyl hydroxyethylcellulose, carboxymethyl cellulose, carboxymethyl hydroxyethylcellulose, and salts thereof.

5. A colorant composition according to any preceding claim, which contains the additional components of:
e) sodium biphosphate;
f) carnauba wax emulsion; and
g) surfactant.

6. A colorant composition according to any preceding claim, comprising:
a) from about 0.3 wt. % to about 3.0 wt.% bixin in food grade oil;
b) from about 50 wt.% to about 90 wt.% aqueous neutralized liquid smoke having a pH in the range of about 4.0 to about 9.0, with a lower titratable acidity of less than about 6%;
c) from about 0.05 wt.% to about 0.20 wt.% sodium erythorbate;
d) from about 0.4wt.% to about 0.8 wt.% carboxy methylcellulose;
e) from about 0.15 wt.% to about 0.50 wt.% sodium biphosphate;
f) from about 0.5 wt.% to about 2.0 wt.% carnauba wax emulsion; and
g) from about 0.1 wt.% to about 1.5 wt.% of Tween 80.

7. A colorant composition according to claim 6, wherein said bixin in oil is Annatto A-400-S.

8. A peelable, self-coloring, shirred food casing having an internal coating comprising the colorant composition of any preceding claim in an amount effective to color a foodstuff encased therein during cooking or pasteurization.

9. A casing according to claim 8, wherein said colorant composition is present on the internal wall of the casing in a concentration of from about 600 to about 1200 mg/100 in² (about 0.93 to about 1.86 mg/100 cm²).

10. A casing according to claim 8 or claim 9, wherein said casing has L,a,b colorimetry values such that the L-value is at least 10.0 points less than clear casing, and the a-value is at least 7 points greater than clear casing.

11. A casing according to claim 10, wherein said L-value is from about 12 to about 20 points less than clear casing and the a-value is from about 8 to about 12 points greater than clear casing.

12. A casing according to any one of claims 8 to 11, wherein said casing is cellulosic, polymeric or nylon, and wherein the internal food-contact layer is an absorbent material.

13. A peelable, self-coloring, shirred food casing having an internal coating comprising:
a) at least one natural red colorant;
b) an antioxidant; and
c) optionally, a peeling aid
in an amount effective to color a foodstuff encased therein during cooking or pasteurization, wherein said internal coating is present on the internal wall of said casing in a concentration of from about 600 to about 1200 mg/100 in² (about 0.93 to about 1.86 mg/100 cm²), and wherein said casing has L,a,b colorimetry values such that the L-value is at least 10.0 points less than clear casing, and the a-value is at least 7 points greater than clear casing.

14. A casing according to claim 13, wherein the internal coating comprises:
a) at least one natural red colorant selected from the group consisting of bixin, annatto, carmine, cochineal, paprika, elderberry, grape, cabbage, beet, and logwood, in an amount effective to color a foodstuff encased therein during cooking or pasteurization;
b) from about 0.05 wt.% to about 0.20 wt.% sodium erythorbate;
c) from about 0.4 wt.% to about 0.8 wt.% carboxy methylcellulose;
d) from about 0.15 wt.% to about 0.50 wt.% sodium biphosphate;
e) from about 0.5 wt.% to about 2.0 wt.% carnauba wax emulsion; and
f) from about 0.1 wt.% to about 1.5 wt.% of Tween 80.

15. A process for producing a uniformly colored foodstuff comprising providing a foodstuff for processing; delivering a peelable, self-coloring, food casing and stuffing or enclosing said foodstuff into said food casing having an internal coating comprising the colorant composition of any one of claims 1 to 7 in an amount effective to color the outer surface of said encased foodstuff; cooking or pasteurizing said encased foodstuff; and peeling off said casing from the resulting uniformly colored foodstuff.

16. A process according to claim 15, wherein the food casing is shirred and the foodstuff is selected from the group consisting of a sausage mixture of coarsely-ground meats, a meat emulsion, cheese, and processed beans.

17. A process according to claim 15, wherein the food casing is selected from the group of planar films, tubular films, pouches and bags.

18. A process according to claim 17, wherein said foodstuff is selected from the group of whole muscle meats, hams, turkeys, chicken, and beef.

19. A process for producing a uniformly colored foodstuff comprising: providing a foodstuff for processing; delivering a peelable, self-coloring, food casing selected from the group of planar films, tubular films, pouches and bags, and enclosing said foodstuff into said food casing having a food contact surface internal coating comprising a colorant composition of a) a natural red colorant; b) an antioxidant; and c) optionally, a peeling aid in an amount effective to color the outer surface of said encased foodstuff; contacting said encased foodstuff with neutralized liquid smoke during cooking or pasteurization of said encased foodstuff; and peeling off said casing from the resulting uniformly colored foodstuff.

20. A process according to claim 19, wherein said foodstuff is selected from the group consisting of a sausage mixture of coarsely-ground meats, a meat emulsion, cheese, and processed beans or is selected from the group of whole muscle meats, hams, turkeys, chicken, and beef.

21. A process according to claim 19 or claim 20, wherein said colorant composition contains the additional components of:
d) sodium biphosphate;
e) carnauba wax emulsion; and
f) surfactant.
